# EUROPEAN PATENT APPLICATION

(11) **EP 4 685 302 A1**
(43) Date of publication of application: **28.01.2026**
(21) Application number: 23940456.9
(22) Date of filing: 17.11.2023
(51) Int. Cl.: E03F 5/04

(54) **QUICK-CLEANING FLOOR DRAIN HAVING CLEANING COMPONENT CAPABLE OF BEING QUICKLY REPLACED**

(30) Priority: 03.06.2023 CN 202310650463
(71) Applicant: Guangdong Jinkaida Industry Co., Ltd., Chaozhou, Guangdong 521000 (CN)
(72) Inventor: XU, Jianping, Chaozhou, Guangdong 521000 (CN)
(74) Representative: Plavsa, Olga
(86) International application number: PCT/CN2023/132391
(87) International publication number: WO 2024/250580

(57) **Abstract**

A quick-cleaning floor drain with a quickly replaced cleaning part, comprising a floor drain main body (1), a floor drain core (2) being embedded into the floor drain main body (1), wherein a quick-cleaning mechanism capable of being taken out quickly is disposed in the floor drain core (2), the quick-cleaning mechanism comprises an extraction rod (5) and a quick-cleaning member (4), a connecting end is disposed on an upper surface of the quick-cleaning member (4), an engaging end is disposed at a bottom of the extraction rod (5), and the engaging end and the connecting end cooperate with each other and are detachably fixed.

## Description

### TECHNICAL FIELD

The present invention belongs to the technical field of floor drains for drainage, and particularly relates to a quick-cleaning floor drain with a quickly replaced cleaning part.

### BACKGROUND

A floor drain is a draining apparatus that connects the ground to a draining pipeline system, which is an important interface that connects the draining pipeline system to the indoor ground. As an important component of the draining system in a residence, the performance of the floor drain directly affects the quality of indoor air, and the floor drain is very important for odour control of a bathroom.

To make the floor drain have better deodorization and drainage effects, a floor drain core that matches the floor drain and has a better use effect is often used in combination, and during actual use, if the floor drain core is damaged, it can also be directly replaced without detaching the floor drain, which avoids the cumbersomeness of disassembly and installation of the floor drain.

The floor drain is usually used in a bathroom, and debris such as hair is likely to be generated in the bathroom. To avoid blockage of a sewer, such debris needs to be isolated to prevent it from flowing into the sewer and causing blockage thereof. Therefore, most floor drains are provided with filter parts. Some of the filter parts are panel-type filter parts that directly cover the floor drains. If the panel type filter parts are separately used, the blocking effect on long and thin strip-shaped objects, such as hairs, is not good, and it still tends to cause blockage of the sewer. The floor drain panel is usually planar and cannot store garbage. Therefore, garbage is easily accumulated and needs to be cleaned frequently. Sometimes, garbage needs to be cleaned many times after one-time use. For example, when a female washes her hair and takes a shower together, due to the accumulation of fallen hair, the floor drain panel is likely to be blocked, which seriously affects drainage, and timely cleaning is required to ensure normal drainage and use.

Aiming at defects in the prior art, the applicant of the present application has researched and developed a conveniently cleaned floor drain, a floor drain basket, and a floor drain core and filed a patent application. This patent discloses a simply and quickly cleaned part: quick-cleaning mechanism. However, as far as the applied content, the quick-cleaning mechanism still has some minor issues. The major problem lies in that when the quick-cleaning mechanism is taken out and cleaned, if there is much debris that winds the extraction rod, manual intervention for debris removal may still be inevitably required. For cleaning staff, although the cleaning time is effectively shortened and a relatively friendly cleaning mode is provided, the possibility that cleaning personnel come into contact with dirty debris still cannot be completely avoided.

### SUMMARY

The present invention aims to further provide a quick-cleaning floor drain with a quickly replaced cleaning part, which can be quickly cleaned and enables cleaning personnel to completely avoid touching debris.

A technical solution adopted by the present invention to solve the above technical problem is as follows:

A quick-cleaning floor drain with a quickly replaced cleaning part, including a floor drain main body, a floor drain core being embedded into the floor drain main body, where a quick-cleaning mechanism capable of being taken out quickly is disposed in the floor drain core, the quick-cleaning mechanism matches a draining channel of the floor drain core, the quick-cleaning mechanism includes an extraction rod and a quick-cleaning member, the quick-cleaning member and the draining channel cooperate with each other to drain and block debris in water, a connecting end is disposed on an upper surface of the quick-cleaning member, an engaging end is disposed at a bottom of the extraction rod, and the engaging end and the connecting end cooperate with each other and are detachably fixed. Preferably, the quick-cleaning member is a disposable design, is directly formed by a low-cost material, and is low in cost and convenient to use.

Specifically, the connecting end is an iron piece integrally formed with the quick-cleaning member or embedded onto an upper surface of the quick-cleaning member, the engaging end is a magnet embedded onto a bottom of the extraction rod, and the magnet adsorbs the iron piece.

Specifically, the connecting end is a convex column protruding from the upper surface of the quick-cleaning member, the convex column is provided with an engaging rail surrounding the convex column, the engaging end is a cavity formed in the bottom of the extraction rod matching the convex column, and an engaging groove matching the engaging rail is formed in a side wall of the cavity.

Preferably, the extraction rod is hollow inside and is equipped with an aromatherapy bar, a floor drain panel is disposed on an upper surface of the floor drain main body, a quick-cleaning hole is formed in the floor drain panel above the quick-cleaning mechanism, an area of the quick-cleaning hole is larger than an area of the quick-cleaning mechanism, the quick-cleaning mechanism is capable of being directly taken out through the quick-cleaning hole, a decorative cover matching the quick-cleaning hole is disposed at a top of the extraction rod, and when the quick-cleaning mechanism is placed in the floor drain core, the decorative cover is located in the quick-cleaning hole, and an upper surface of the decorative cover is flush with an upper surface of the floor drain panel.

Specifically, the connecting end is an engaging column disposed on the upper surface of the quick-cleaning member, the extraction rod is hollow inside and an engaging mechanism is embedded into the extraction rod, the engaging mechanism comprises an engaging member and a controller, the engaging member is disposed at the bottom end of the extraction rod and is configured to engage or disengage the engaging column, and the controller is disposed in the extraction rod and controls engagement or disengagement of the engaging end.

Further, a circle of support ring is disposed on an inner wall of the extraction rod, the controller is mounted on the support ring and extends below the support ring and is connected to the engaging member, the engaging member includes two symmetrically disposed engaging teeth and a hinge member, hinge heads are disposed at upper ends of the engaging teeth, the hinge heads of the two engaging teeth are staggered and fixed on the hinge member through pins, limiting holes and engaging holes are formed in opposite surfaces of the two hinge heads, engaging springs are embedded into the two limiting holes, and the two engaging holes match and cooperatively enclose the engaging column.

Further, the controller includes a controlling member and a controlling spring, the controlling spring is embedded under the controlling member and supported in the support ring, a connecting rod extending downward is disposed in the middle of the controlling member, a bottom of the connecting rod is fixedly connected to a top of the hinge member, the controlling member is embedded into the extraction rod and is partially exposed outside the extraction rod, and the controlling spring supports a reset operation of the controlling member in the extraction rod after being pressed down.

Preferably, a floor drain panel is disposed on an upper surface of the floor drain main body, a quick-cleaning hole is formed in the floor drain panel above the quick-cleaning mechanism, an area of the quick-cleaning hole is larger than an area of the quick-cleaning mechanism, the quick-cleaning mechanism is capable of being directly taken out through the quick-cleaning hole, a decorative cover matching the quick-cleaning hole is disposed at a top of the extraction rod, when the quick-cleaning mechanism is placed in the floor drain core, the decorative cover is located in the quick-cleaning hole and an upper surface of the decorative cover is flush with an upper surface of the floor drain panel, an operating hole is formed in the decorative cover, and the controller is operated through the operating hole.

More preferably, a pushing block is disposed in the operating hole, the pushing block is embedded into the operating hole and is capable of sliding in the operating hole, the controller is located below the decorative cover, a lower end of the pushing block is in an inverted triangle arrangement, a bottom end of the pushing block matches a top end of the controller, and the pushing block controls the controller to operate.

Specifically, a floor drain basket is disposed in the floor drain core, the floor drain basket matches the draining channel, the quick-cleaning mechanism is disposed in the floor drain basket and matches an inner bottom surface of the floor drain basket, and the quick-cleaning mechanism matches the floor drain basket to facilitate drainage.

The present invention has the following beneficial effects: by disposing the quick-cleaning member which can be quickly separated and mounted, and the extraction rod, when the quick-cleaning mechanism performs cleaning, the quick-cleaning member can be directly discarded and replaced with a new quick-cleaning member, such that when the quick-cleaning member carrying dirty debris is separated and falls off, the debris is separated synchronously, which avoids cleaning of the quick-cleaning mechanism and the quick-cleaning member only needs to be directly replaced. The cleaning staff is completely prevented from touching the dirty debris, and the quick-cleaning floor drain is low in cost and convenient to use.

### BRIEF DESCRIPTION OF DRAWINGS

FIG. 1 is an overall schematic structural diagram of Embodiment 1 of the present invention.
FIG. 2 is a schematic diagram of a take-out state of a quick-cleaning mechanism in Embodiment 1 of the present invention.
FIG. 3 is a schematic diagram of a split state in Embodiment 1 of the present invention.
FIG. 4 is a schematic diagram of a split state of a quick-cleaning mechanism in Embodiment 1 of the present invention.
FIG. 5 is a schematic cross-sectional view of the quick-cleaning mechanism in Embodiment 1 of the present invention.
FIG. 6 is a schematic diagram of a take-out state of a quick-cleaning mechanism in Embodiment 2 of the present invention.
FIG. 7 is a schematic diagram of a split state of a quick-cleaning mechanism in Embodiment 2 of the present invention.
FIG. 8 is a schematic cross-sectional view of the quick-cleaning mechanism in Embodiment 2 of the present invention.
FIG. 9 is an overall schematic structural diagram of Embodiment 3 of the present invention.
FIG. 10 is a schematic diagram of a take-out state of a quick-cleaning mechanism in Embodiment 3 of the present invention.
FIG. 11 is a schematic diagram of a state of assembling and disassembling a quick-cleaning member by the quick-cleaning mechanism in Embodiment 3 of the present invention.
FIG. 12 is a schematic diagram of a split state of a quick-cleaning mechanism in Embodiment 3 of the present invention.
FIG. 13 is a schematic structural diagram of an engaging tooth in Embodiment 3 of the present invention.
FIG. 14 is a schematic cross-sectional view of the quick-cleaning mechanism in Embodiment 3 of the present invention.
FIG. 15 is a schematic diagram of a take-out state of a quick-cleaning mechanism in Embodiment 4 of the present invention.
FIG. 16 is a schematic diagram of a state of assembling and disassembling a quick-cleaning member by the quick-cleaning mechanism in Embodiment 4 of the present invention.
FIG. 17 is a schematic diagram of a split state of a quick-cleaning mechanism in Embodiment 4 of the present invention.
FIG. 18 is a schematic cross-sectional view of the quick-cleaning mechanism in Embodiment 4 of the present invention.
FIG. 19 is a schematic diagram of a take-out state of a quick-cleaning mechanism in Embodiment 5 of the present invention.
FIG. 20 is a schematic diagram of a state of assembling and disassembling a quick-cleaning member by the quick-cleaning mechanism in Embodiment 5 of the present invention.
FIG. 21 is a schematic diagram of a split state of a quick-cleaning mechanism in Embodiment 5 of the present invention.
FIG. 22 is a schematic cross-sectional view of the quick-cleaning mechanism in Embodiment 5 of the present invention.

The meanings of respective reference numerals in the accompanying drawings are as follows:

1, floor drain main body; 2, floor drain core; 3, floor drain basket; 4, quick-cleaning member; 41, iron piece; 42, convex column; 43, engaging rail; 44, engaging column; 5, extraction rod; 51, magnet; 52, cavity; 53, engaging groove; 54, support ring; 55, controlling member; 551, connecting rod; 56, controlling spring; 57, hinge member; 58, engaging tooth; 581, hinge head; 582, limiting hole; 583, engaging hole; 59, engaging spring; 6, floor drain panel; 61, quick-cleaning hole; 7, decorative cover; 71, operating hole; 72, pushing block; 8, aromatherapy bar.

### DETAILED DESCRIPTION OF THE EMBODIMENTS

The present invention will be described in detail in conjunction with the drawings.

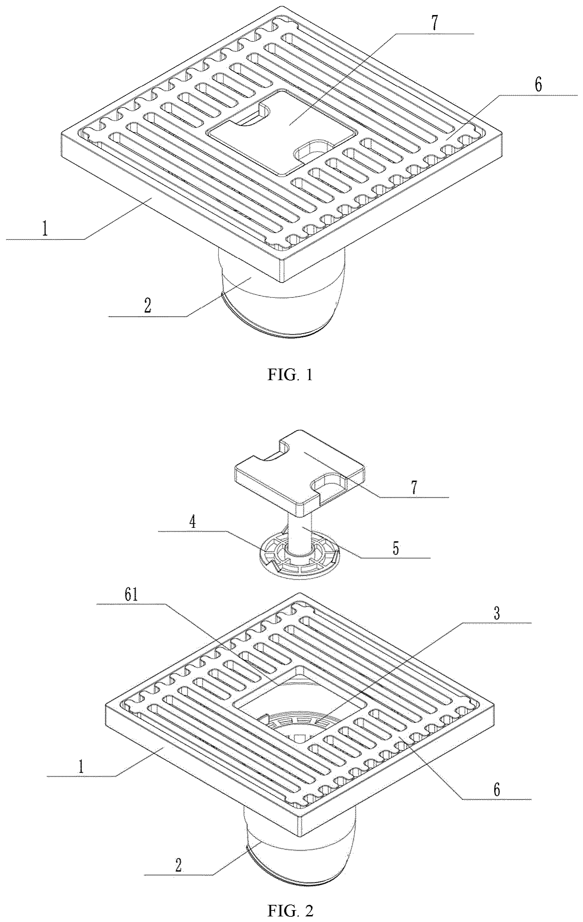

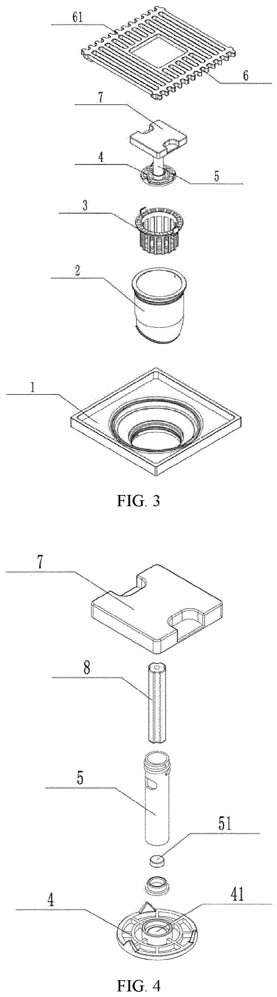

A quick-cleaning floor drain with a quickly replaced cleaning part in Embodiment 1 of the present invention is shown in FIGS. 1-5 includes a floor drain main body 1, where a floor drain core 2 is embedded into the floor drain main body 1, a quick-cleaning mechanism capable of being taken out quickly is disposed in the floor drain core 2, the quick-cleaning mechanism matches a draining channel of the floor drain core 2, the quick-cleaning mechanism includes an extraction rod 5 and a quick-cleaning member 4, the quick-cleaning member 4 and the draining channel cooperate with each other to drain and block debris in water, a connecting end is disposed on an upper surface of the quick-cleaning member 4, an engaging end is disposed at a bottom of the extraction rod 5, and the engaging end and the connecting end cooperate with each other and are detachably fixed. Preferably, the quick-cleaning member 4 is a disposable design, is directly formed by a low-cost material, and is low in cost and convenient to use. By blocking the draining channel by means of the quick-cleaning mechanism, the debris is uniformly accumulated on the quick-cleaning mechanism. When the quick-cleaning mechanism is taken out, the debris can be completely taken out to achieve a quick-cleaning purpose. Moreover, in order to avoid the difficulty in cleaning the quick-cleaning mechanism, the detachable quick-cleaning member 4 can be directly adopted in the design. During cleaning, the quick-cleaning member 4 is directly removed, and all debris is driven to fall off from the extraction rod 5, thereby achieving the quick-cleaning purpose. Then, the quick-cleaning member is replaced with a new quick-cleaning member 4, such that the purpose of quickly replacing the cleaning component is achieved, which solves the technical problem to be solved in the present invention.

Specifically, a floor drain basket 3 is disposed in the floor drain core 2, the floor drain basket 3 matches the draining channel, the quick-cleaning mechanism is disposed in the floor drain basket 3 and matches an inner bottom surface of the floor drain basket 3, and the quick-cleaning mechanism matches the floor drain basket 3 to facilitate drainage. By designing the floor drain basket 3, particularly, forming the draining holes in both the side surface and the bottom surface of the floor drain basket 3, draining can be performed through the draining hole, such that the draining efficiency is increased. Moreover, a situation where the draining channel is directly blocked when the quick-cleaning member 4 is blocked can also be avoided when only the quick-cleaning mechanism is disposed. Moreover, the floor drain basket 3 is directly erected in the floor drain core 2 to play a certain role in supporting the quick-cleaning mechanism without modifying the floor drain core 2. By disposing the supporting component that supports the quick-cleaning mechanism, the quick-cleaning mechanism can be directly applied to the existing floor drain core 2.

In this embodiment, specifically, the connecting end is an iron piece 41 integrally formed with the quick-cleaning member 4 or embedded onto an upper surface of the quick-cleaning member 4, the engaging end is a magnet embedded onto a bottom of the extraction rod 5, and the magnet 51 adsorbs the iron piece 41. By way of adsorbing the iron piece 41 by the magnets 51, the extraction rod 5 and the quick-cleaning member 4 are connected. During cleaning, it is only necessary to hang the quick-cleaning member 4 on the side wall of a trash can and pull the same, such that the quick-cleaning member 4 can be separated from the extraction rod 5, thereby achieving the purpose of quick cleaning. It is more convenient to replace a new quick-cleaning member 4 by direct alignment adsorption. The magnets 51 can be mounted by directly sealing the bottoms or covering the magnets with bottom sealing covers after placing the magnets 51. The whole quick-cleaning member 4 may be formed by directly pressing the iron piece 41 or may be achieved by embedding the small iron piece 41 onto the quick-cleaning member 4 made of a plastic material.

Preferably, the extraction rod 5 is hollow inside and is equipped with an aromatherapy bar 8, a floor drain panel 6 is disposed on an upper surface of the floor drain main body 1, a quick-cleaning hole 61 is formed in the floor drain panel 6 above the quick-cleaning mechanism, an area of the quick-cleaning hole 61 is larger than an area of the quick-cleaning mechanism, the quick-cleaning mechanism is capable of being directly taken out through the quick-cleaning hole 61, a decorative cover 7 matching the quick-cleaning hole 61 is disposed at a top of the extraction rod 5, and when the quick-cleaning mechanism is placed in the floor drain core 2, the decorative cover 7 is located in the quick-cleaning hole 61, and an upper surface of the decorative cover 7 is flush with an upper surface of the floor drain panel 6. By forming the quick-cleaning hole 61, when the quick-cleaning mechanism performs cleaning, the floor drain can be directly taken out without being disassembled, such that a quick-cleaning purpose is achieved. By disposing the decorative cover 7, after the floor drain panel 6 is provided with the quick-cleaning hole 61, compensated by the decorative cover 7, the floor drain panel has a good appearance and appears more integral, dedicated, and attractive. Moreover, the decorative cover 7 may be directly connected to the quick-cleaning mechanism. The quick-cleaning mechanism can be taken out from the quick-cleaning hole 61 synchronously while the decorative cover 7 is taken out, such that it is more convenient to clean.

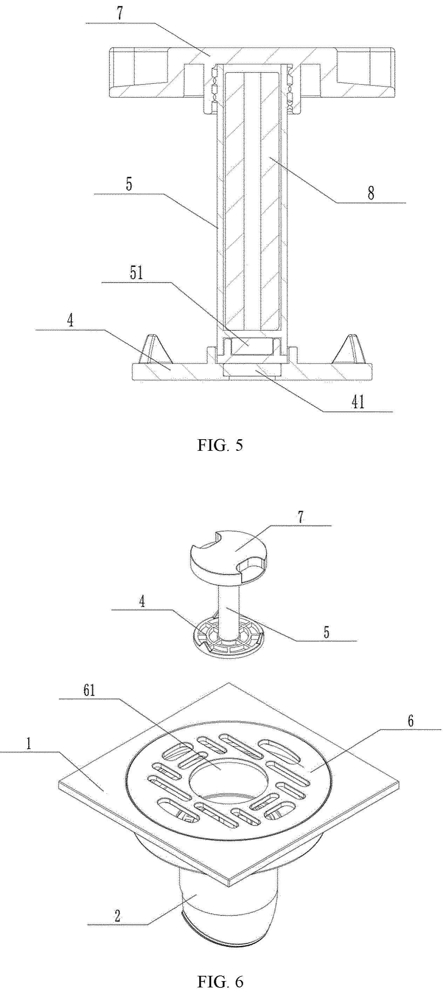

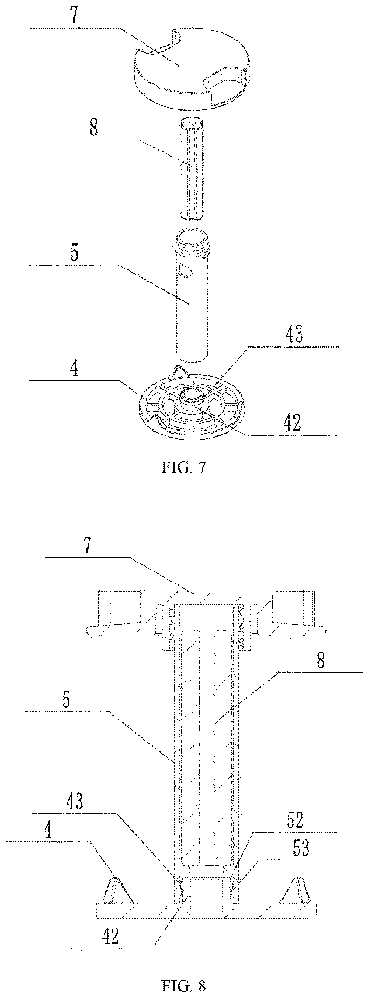

Embodiment 2 is substantially the same as Embodiment 1, and the difference between the two embodiments is as follows: specifically, as shown in FIGS. 6-8, the connecting end is a convex column 42 protruding from the upper surface of the quick-cleaning member 4, the convex column 42 is provided with an engaging rail 43 surrounding the convex column 42, the engaging end is a cavity 52 formed in the bottom of the extraction rod 5 matching the convex column 42, and an engaging groove 53 matching the engaging rail 43 is formed in a side wall of the cavity 52. In this embodiment, the engaging rail 43 cooperates with the engaging groove 53 in the convex column 42, such that the quick-cleaning member 4 is connected to the extraction rod 5. By adopting the arc-shaped transition design, the engaging rail 43 and the engaging groove 53 are smoothly engaged and disengaged. During disassembly, the floor drain can be disassembled by pulling with the aid of the trash can wall using an external force. During installation, the floor drain can be mounted by means of direct alignment pressing. The floor drain is simple in overall structure and convenient and rapid to use.

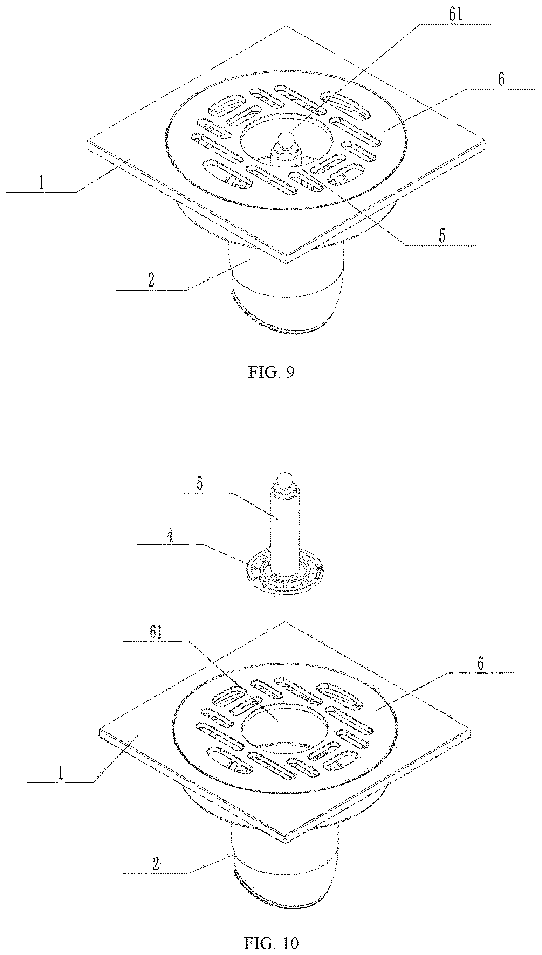

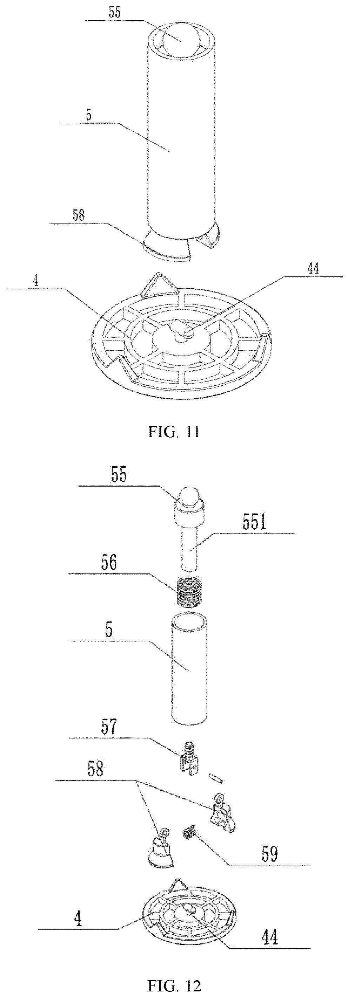

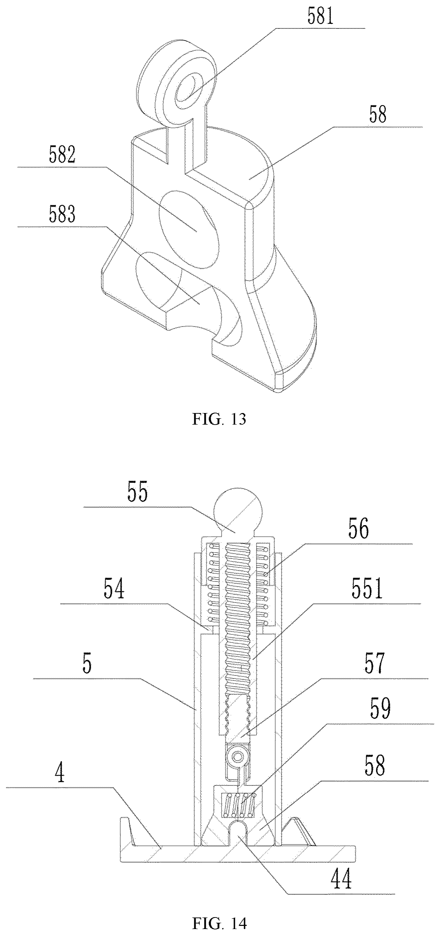

Embodiment 3 is substantially the same as Embodiment 1, and the difference between the two embodiments is as follows: specifically, as shown in FIGS. 9-14, the connecting end is an engaging column 44 disposed on the upper surface of the quick-cleaning member 4, the extraction rod 5 is hollow inside and an engaging mechanism is embedded into the extraction rod, the engaging mechanism comprises an engaging member and a controller, the engaging member is disposed at the bottom end of the extraction rod 5 and is configured to engage or disengage the engaging column 44, and the controller is disposed in the extraction rod 5 and controls engagement or disengagement of the engaging end. The engaging member cooperates with the engaging column 44. Under the control of the controller, the quick-cleaning member 4 is detached and mounted. Due to the presence of this design, the quick-cleaning member 4 is disassembled only by operating the controller without other external forces. The overall floor drain is smoother to use and better in practicality and user experience.

Further, a circle of support ring 54 is disposed on an inner wall of the extraction rod 5, the controller is mounted on the support ring 54 and extends below the support ring 54 and is connected to the engaging member, the engaging member includes two symmetrically disposed engaging teeth 58 and a hinge member 57, hinge heads 581 are disposed at upper ends of the engaging teeth 58, the hinge heads 581 of the two engaging teeth 58 are staggered and fixed on the hinge member 57 through pins, limiting holes 582 and engaging holes 583 are formed in opposite surfaces of the two hinge heads 581, engaging springs 59 are embedded into the two limiting holes 582, and the two engaging holes 583 match and cooperatively enclose the engaging column 44. Further, the controller includes a controlling member 55 and a controlling spring 56, the controlling spring 56 is embedded under the controlling member 55 and supported in the support ring 54, a connecting rod 551 extending downward is disposed in the middle of the controlling member 55, a bottom of the connecting rod 551 is fixedly connected to a top of the hinge member 57, the controlling member 55 is embedded into the extraction rod 5 and is partially exposed outside the extraction rod 5, and the controlling spring 56 supports a reset operation of the controlling member 55 in the extraction rod 5 after being pressed down. In this embodiment, the two engaging teeth 58 cooperate with each other to engage the engaging column 44. In order to enable the engaging column 44 to be stably engaged, the engaging column 44 needs to be in a shape that is larger at the top and smaller at the bottom. The shape of the engaging hole 583 matches the outer surface of the engaging column 44, such that when the two symmetrical engaging holes 583 in an engaging state completely enclose the engaging column 44 to form the engaging state, thereby preventing the quick-cleaning member 4 from falling off.

The actual working process of the controller and the engaging member is as follows: the controlling member 55 is pressed down, such that the controlling spring 56 deforms to accumulate a reset force. Pushed by the connecting rod 551, the engaging member is pushed to descend synchronously until the two engaging teeth 58 protrude out of the lower surface of the extraction rod 5. In this case, since the engaging teeth 58 are not limited by the inner wall of the extraction rod 5, under the action of the supporting force of the engaging spring 59, the engaging teeth are in a state of being separated left and right to expose the engaging hole 583. This separated state is formed based on the hinge head 581 and the hinge member 57 based on a pin connection, that is, the separated state means rotation based on the axis of the pin. Therefore, matched with the lower opening of the extraction rod 5, the risk that the engaging spring 59 falls off due to an excessive opening under the action of the supporting force of the engaging spring 59 can be avoided. In this case, the engaging column 44 of the quick-cleaning member 4 is placed between the engaging teeth 58 opened left and right. Then the controller is loosened. Under the elastic force of the spring, the controller resets to drive the engaging member to ascend and to be accommodated in the extraction rod 5 again, thereby achieving engagement of the quick-cleaning member 4. It is more convenient to disassemble. The controlling member 55 is repeatedly pressed down till the engaging teeth 58 are in the state of being separated left and right. Under the drive of gravity, the quick-cleaning member 4 will directly fall off, such that the disassembling operation is completed. The whole process is smooth and stable, and the purpose to be achieved by the present application is quickly achieved.

Preferably, a floor drain panel 6 is disposed on an upper surface of the floor drain main body 1, a quick-cleaning hole 61 is formed in the floor drain panel 6 above the quick-cleaning mechanism, an area of the quick-cleaning hole 61 is larger than an area of the quick-cleaning mechanism, and the quick-cleaning mechanism is capable of being directly taken out through the quick-cleaning hole 61.

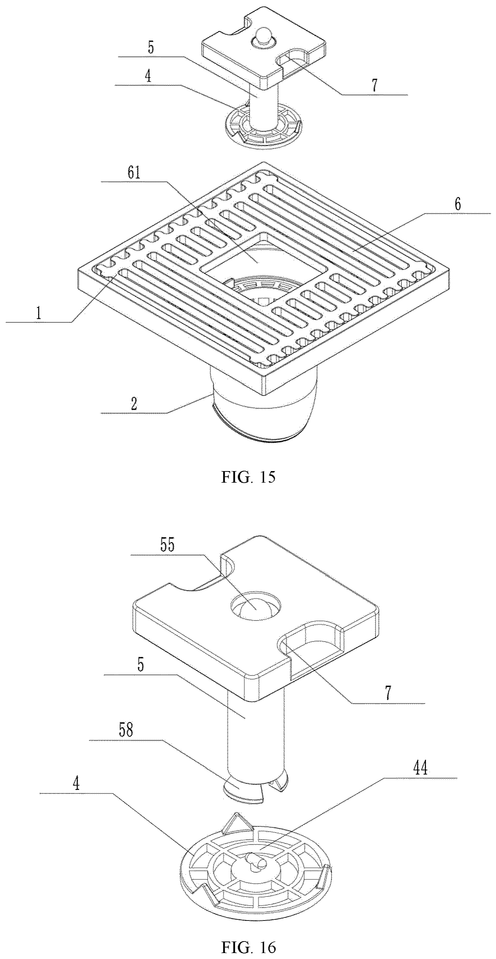

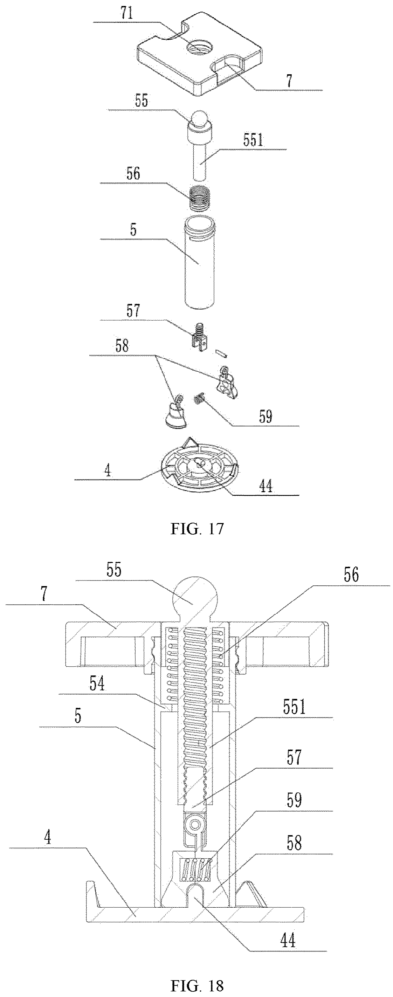

Embodiment 4 is substantially the same as Embodiment 3, and the difference between the two embodiments is as follows: specifically, as shown in FIGS. 15-18, a decorative cover 7 matching the quick-cleaning hole 61 is disposed at a top of the extraction rod 5, and when the quick-cleaning mechanism is placed in the floor drain core 2, the decorative cover 7 is located in the quick-cleaning hole 61, and an upper surface of the decorative cover 7 is flush with an upper surface of the floor drain panel 6. An operating hole 71 is formed in the decorative cover 7, and the controller is operated through the operating hole 71. In this embodiment, the top end of the controlling member 55 is exposed above the decorative cover 7 through the operating hole 71, and the quick-changing operation of the quick-cleaning member 4 can be achieved only by pressing the controlling member 55 on the decorative cover 7.

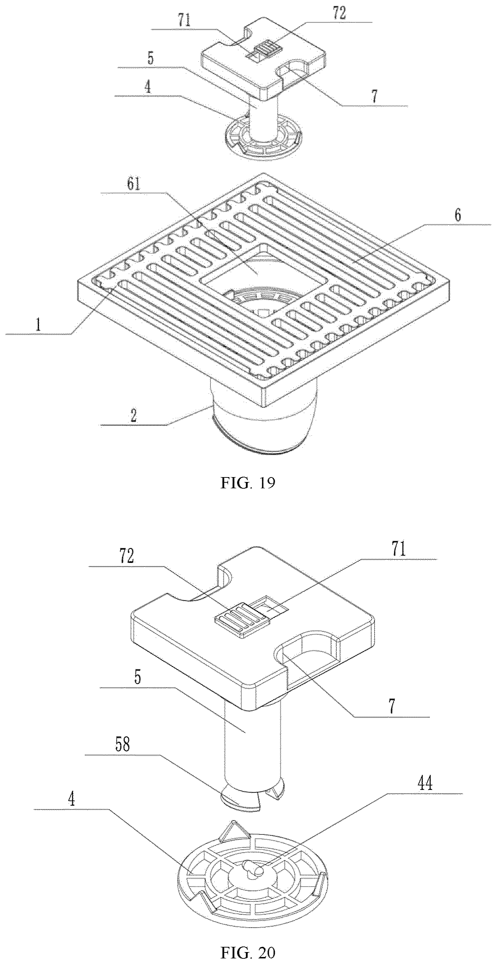

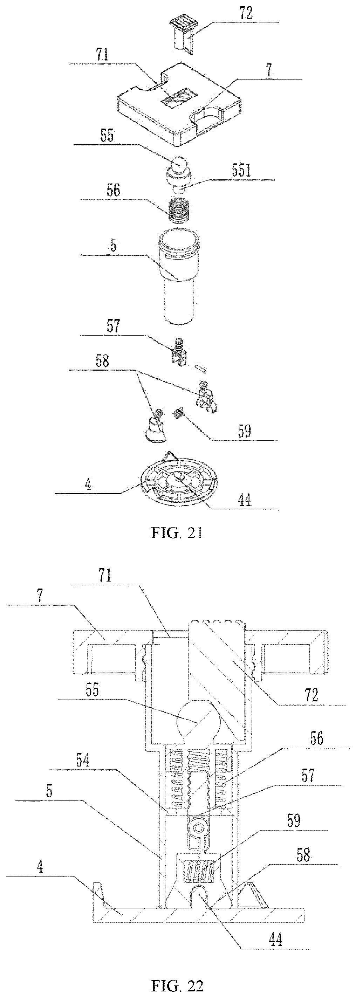

Embodiment 5 is substantially the same as Embodiment 3, and the difference between the two embodiments is as follows: specifically, as shown in FIGS. 19-22, a decorative cover 7 matching the quick-cleaning hole 61 is disposed at a top of the extraction rod 5, and when the quick-cleaning mechanism is placed in the floor drain core 2, the decorative cover 7 is located in the quick-cleaning hole 61, and an upper surface of the decorative cover 7 is flush with an upper surface of the floor drain panel 6. The decorative cover 7 is provided with an operating hole 71. More preferably, a pushing block 72 is disposed in the operating hole 71, the pushing block 72 is embedded into the operating hole 71 and is capable of sliding in the operating hole 71, the controller is located below the decorative cover 7, a lower end of the pushing block 72 is in an inverted triangle arrangement, a bottom end of the pushing block 72 matches a top end of the controller, and the pushing block 72 controls the controller to operate.

In this embodiment, the controller is completely covered by the decorative cover 7, such that the protruding structure will not be formed on the floor drain panel 6. The operation is achieved by disposing the push block 72 in a planar design at the upper end in the operating hole 71. By pushing the pushing block 72, the inverted triangular structure at the bottom end of the pushing block 72 presses the top end of the controlling member 55 to force the controlling member 55 to move downward. When the pushing block 72 is pushed to an end point, the engaging teeth 58 also arrive at a position in the corresponding disassembled state. When the engaging teeth are to close, the pushing block 72 is only reset, and the controlling member 55 will reset under the elastic force of the spring to meet the closing requirement. This embodiment has a further advantage of controlling the opening time of the engaging teeth 58 by the pushing block 72. The engaging teeth 58 can be maintained open continuously without being pressed down for a long time, such that it is more convenient and rapid to use.

The above content is a further detailed description of the present invention in conjunction with specific preferred embodiments, and it shall not be deemed that the specific implementation of the present invention is limited only to these descriptions. For those of ordinary skill in the art to which the present invention pertains, without departing from the concept of the present invention, several simple deductions or substitutions can also be made, all of which shall be deemed to fall within the protection scope of the present invention.

## Claims

1. A quick-cleaning floor drain with a quickly replaced cleaning part, comprising a floor drain main body (1), a floor drain core (2) being embedded into the floor drain main body (1), wherein a quick-cleaning mechanism capable of being taken out quickly is disposed in the floor drain core (2), the quick-cleaning mechanism matches a draining channel of the floor drain core (2), the quick-cleaning mechanism comprises an extraction rod (5) and a quick-cleaning member (4), the quick-cleaning member (4) and the draining channel cooperate with each other to drain and block debris in water, a connecting end is disposed on an upper surface of the quick-cleaning member (4), an engaging end is disposed at a bottom of the extraction rod (5), and the engaging end and the connecting end cooperate with each other and are detachably fixed.

2. The quick-cleaning floor drain with a quickly replaced cleaning part according to claim 1, **characterized in that** the connecting end is an iron piece (41) integrally formed with the quick-cleaning member (4) or embedded onto an upper surface of the quick-cleaning member (4), the engaging end is a magnet (51) embedded onto a bottom of the extraction rod (5), and the magnet (51) adsorbs the iron piece (41).

3. The quick-cleaning floor drain with a quickly replaced cleaning part according to claim 1, **characterized in that** the connecting end is a convex column (42) protruding from the upper surface of the quick-cleaning member (4), the convex column (42) is provided with an engaging rail (43) surrounding the convex column (42), the engaging end is a cavity (52) formed in the bottom of the extraction rod (5) matching the convex column (42), and an engaging groove (53) matching the engaging rail (43) is formed in a side wall of the cavity (52).

4. The quick-cleaning floor drain with a quickly replaced cleaning part according to claims 2 or 3, **characterized in that** the extraction rod (5) is hollow inside and is equipped with an aromatherapy bar (8), a floor drain panel (6) is disposed on an upper surface of the floor drain main body (1), a quick-cleaning hole (61) is formed in the floor drain panel (6) above the quick-cleaning mechanism, an area of the quick-cleaning hole (61) is larger than an area of the quick-cleaning mechanism, the quick-cleaning mechanism is capable of being directly taken out through the quick-cleaning hole (61), a decorative cover (7) matching the quick-cleaning hole (61) is disposed at a top of the extraction rod (5), and when the quick-cleaning mechanism is placed in the floor drain core (2), the decorative cover (7) is located in the quick-cleaning hole (61), and an upper surface of the decorative cover (7) is flush with an upper surface of the floor drain panel (6).

5. The quick-cleaning floor drain with a quickly replaced cleaning part according to claim 1, **characterized in that** the connecting end is an engaging column (44) disposed on the upper surface of the quick-cleaning member (4), the extraction rod (5) is hollow inside and an engaging mechanism is embedded into the extraction rod, the engaging mechanism comprises an engaging member and a controller, the engaging member is disposed at the bottom end of the extraction rod (5) and is configured to engage or disengage the engaging column (44), and the controller is disposed in the extraction rod (5) and controls engagement or disengagement of the engaging end.

6. The quick-cleaning floor drain with a quickly replaced cleaning part according to claim 5, **characterized in that** a circle of support ring (54) is disposed on an inner wall of the extraction rod (5), the controller is mounted on the support ring (54) and extends below the support ring (54) and is connected to the engaging member, the engaging member comprises two symmetrically disposed engaging teeth (58) and a hinge member (57), hinge heads (581) are disposed at upper ends of the engaging teeth (58), the hinge heads (581) of the two engaging teeth (58) are staggered and fixed on the hinge member (57) through pins, limiting holes (582) and engaging holes (583) are formed in opposite surfaces of the two hinge heads (581), engaging springs (59) are embedded into the two limiting holes (582), and the two engaging holes (583) match and cooperatively enclose the engaging column (44).

7. The quick-cleaning floor drain with a quickly replaced cleaning part according to claim 6, **characterized in that** the controller comprises a controlling member (55) and a controlling spring (56), the controlling spring (56) is embedded under the controlling member (55) and supported in the support ring (54), a connecting rod (551) extending downward is disposed in the middle of the controlling member (55), a bottom of the connecting rod (551) is fixedly connected to a top of the hinge member (57), the controlling member (55) is embedded into the extraction rod (5) and is partially exposed outside the extraction rod (5), and the controlling spring (56) supports a reset operation of the controlling member (55) in the extraction rod (5) after being pressed down.

8. The quick-cleaning floor drain with a quickly replaced cleaning part according to any one of claims 6 to 7, **characterized in that** a floor drain panel (6) is disposed on an upper surface of the floor drain main body (1), a quick-cleaning hole (61) is formed in the floor drain panel (6) above the quick-cleaning mechanism, an area of the quick-cleaning hole (61) is larger than an area of the quick-cleaning mechanism, the quick-cleaning mechanism is capable of being directly taken out through the quick-cleaning hole (61), a decorative cover (7) matching the quick-cleaning hole (61) is disposed at a top of the extraction rod (5), when the quick-cleaning mechanism is placed in the floor drain core (2), the decorative cover (7) is located in the quick-cleaning hole (61) and an upper surface of the decorative cover (7) is flush with an upper surface of the floor drain panel (6), an operating hole (71) is formed in the decorative cover (7), and the controller is operated through the operating hole (71).

9. The quick-cleaning floor drain with a quickly replaced cleaning part according to claim 8, **characterized in that** a pushing block (72) is disposed in the operating hole (71), the pushing block (72) is embedded into the operating hole (71) and is capable of sliding in the operating hole (71), the controller is located below the decorative cover (7), a lower end of the pushing block (72) is in an inverted triangle arrangement, a bottom end of the pushing block (72) matches a top end of the controller, and the pushing block (72) controls the controller to operate.

10. The quick-cleaning floor drain with a quickly replaced cleaning part according to any one of claims 1, 2, 3, 5, 6 and 7, **characterized in that** a floor drain basket (3) is disposed in the floor drain core (2), the floor drain basket (3) matches the draining channel, the quick-cleaning mechanism is disposed in the floor drain basket (3) and matches an inner bottom surface of the floor drain basket (3), and the quick-cleaning mechanism matches the floor drain basket (3) to facilitate drainage.
